# EUROPEAN PATENT APPLICATION

(11) **EP 4 175 069 A1**
(43) Date of publication of application: **03.05.2023**
(21) Application number: 21833583.4
(22) Date of filing: 25.06.2021
(51) Int. Cl.: H01Q 7/00, H01Q 1/36

(54) **ANTENNA ASSEMBLY AND TERMINAL DEVICE**

(30) Priority: 30.06.2020 CN 202010630513
(71) Applicant: ZTE Corporation, Shenzhen, Guangdong 518057 (CN)
(72) Inventor: YANG, Shirong, Shenzhen, Guangdong 518057 (CN)
(74) Representative: Ipsilon
(86) International application number: PCT/CN2021/102356
(87) International publication number: WO 2022/001868

(57) **Abstract**

The present disclosure relates to the field of technologies of electronic devices, and provides an antenna assembly and a terminal device. The antenna assembly includes a circuit board, and at least one antenna structure arranged on the circuit board; the circuit board includes a conductive ground plate, and at least one emission slit hole penetrating through the conductive ground plate along a direction in which a thickness of the conductive ground plate extends is formed in the conductive ground plate; and any one of the at least one antenna structure includes a feed branch and a feed part; a position of the feed branch is matched with one of the at least one emission slit hole, and the feed branch is configured to excite the emission slit hole to generate slot antenna radiation; and the feed part is arranged at an edge of the emission slit hole, and is configured to drive the emission slit hole to generate loop antenna radiation.

## Description

The present application claims the priority of Chinese Patent Application No. 202010630513.6, filed on June 30, 2020, the contents of which are incorporated herein in their entirety by reference.

### TECHNICAL FIELD

The present disclosure relates to the field of technologies of electronic devices.

### BACKGROUND

With a rapid development of the field of intelligent terminal devices, 5th Generation Mobile Communication Technology (5G) mobile phones become a focus of a competition between various large terminal manufacturers, and communication advantages of the 5G mobile phones get benefits from a strong capability of transceiving signals of 5G antennas. The existing 5G antennas generally adopt a MIMO (Multi Input Multi Output) antenna technology, and more than ten antennas are generally desired to be arranged inside each mobile phone.

### SUMMARY

An aspect of the present disclosure provides an antenna assembly, including: a circuit board, and at least one antenna structure arranged on the circuit board; the circuit board includes a conductive ground plate, and at least one emission slit hole penetrating through the conductive ground plate along a direction in which a thickness of the conductive ground plate extends is formed in the conductive ground plate; and any one of the at least one antenna structure includes a feed branch and a feed part; a position of the feed branch is matched with one of the at least one emission slit hole, and the feed branch is configured to excite the emission slit hole to generate slot antenna radiation; and the feed part is arranged at an edge of the emission slit hole, and is configured to drive the emission slit hole to generate loop antenna radiation.

Another aspect of the present disclosure provides a terminal device, including: a housing, and a mainboard and an antenna assembly are arranged in the housing; the mainboard emits and receives wireless signals through the antenna assembly, and the antenna assembly is the antenna assembly according to the present disclosure.

### BRIEF DESCRIPTION OF DRAWINGS

Fig. 1 is a structural schematic diagram of an antenna assembly according to the present disclosure.
Fig. 2 is a structural schematic diagram of an antenna assembly according to the present disclosure.
Fig. 3 is a partially enlarged view of Fig. 2.
Fig. 4 is a structural schematic diagram of the antenna assembly shown in Fig. 2 from another perspective.
Fig. 5 is a schematic diagram of return loss curves of a slot antenna component and a loop antenna component in an antenna assembly according to the present disclosure.
Fig. 6 is an isolation curve of a slot antenna component and a loop antenna component in an antenna assembly according to the present disclosure.
Fig. 7 is a structural schematic diagram of an antenna assembly according to the present disclosure.

### DETAIL DESCRIPTION OF EMBODIMENTS

Implementations of the present disclosure are further described in detail below with reference to the accompanying drawings. It should be understood that the specific implementations described herein are merely intended to describe and explain the present disclosure, rather than limiting the present disclosure.

The existing 5G antennas generally adopt a MIMO antenna technology, and more than ten antennas are generally desired to be arranged inside each mobile phone. However, 5G terminal devices expect antennas to meet performances of a 4×4 MIMO system, and in order to improve isolation and envelope correlation coefficient (ECC) performance between antennas, in an existing method for improving antennas, a space distance between antennas is usually selected to be increased, MIMO performance of the antennas is difficult to be maintained, and layout expectations of sub-6G antennas are also difficult to be adapted by improved antennas.

Therefore, how to provide an antenna optimization scheme for improving both the MIMO performance of an antenna and a compactness of an antenna structure becomes a technical problem to be solved in the field.

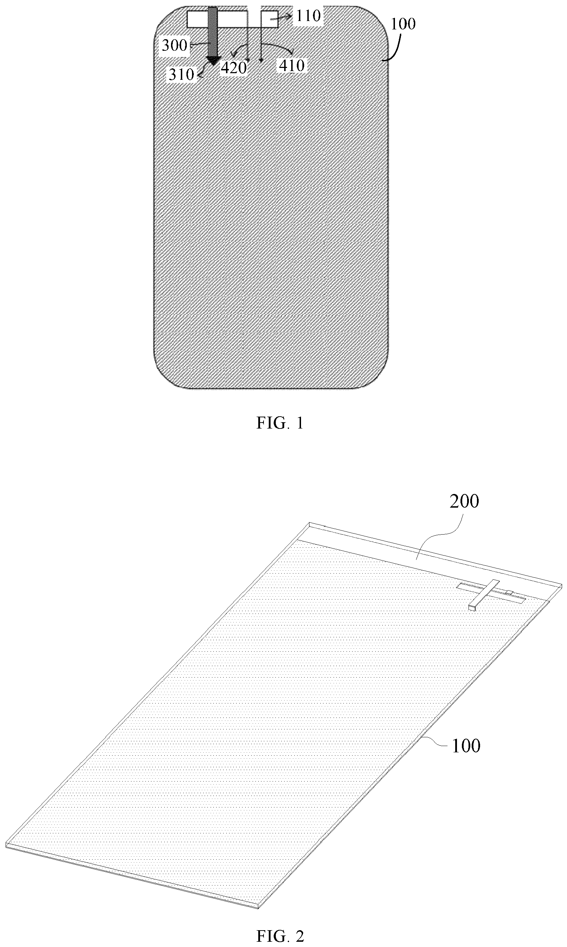

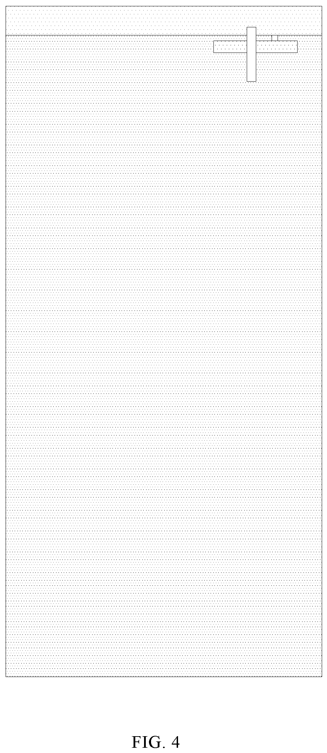

In an aspect of the present disclosure, an antenna assembly is provided, and as shown in Fig. 1 to Fig. 4, the antenna assembly includes a circuit board, and at least one antenna structure arranged on the circuit board. The circuit board includes a conductive ground plate 100, at least one emission slit hole 110 penetrating through the conductive ground plate 100 along a direction in which a thickness of the conductive ground plate 100 extends is formed in the conductive ground plate 100. The antenna structure includes a feed branch 300 and a feed part 400, a position of the feed branch 300 is matched with the emission slit hole 110, and the feed branch 300 is configured for exciting the emission slit hole 110 to generate slot antenna radiation, the feed part 400 is arranged at an edge of the emission slit hole 110 and configured for driving the emission slit hole 110 to generate loop antenna radiation.

In some implementations, the feed branch 300 and the emission slit hole 110 compose a slot antenna component. The feed branch 300 is connected with a feed point and serves as a feed microstrip line, so as to excite the emission slit hole 110 to radiate; the feed part 400 and the emission slit hole 110 compose a loop antenna component. The edge of the emission slit hole 110 serves as a loop antenna of the loop antenna component, the feed part 400 loads a corresponding electrical signal on the loop antenna to drive the loop antenna formed at a periphery of the emission slit hole 110 to generate radiation.

According to the antenna assembly provided by the present disclosure, two antenna components are formed by one emission slit hole 110 in the conductive ground plate 100, so that the emission slit hole 110 serves as both a loop antenna of the loop antenna component and a slit part of the slot antenna component, and thus the two antenna components share one antenna region on the circuit board, an area occupied by the antenna structure on the circuit board and a volume occupied by the antenna structure in the terminal device are reduced, the MIMO performance of the antenna is maintained and an area of a clearance region of the antenna structure is reduced, thereby a compactness of a structure of the terminal device is improved.

A material of the conductive ground plate 100 is not limited by the present disclosure, and for example, the material of the conductive ground plate 100 may be a metal material.

How to configure feeding on the feed branch 300 is not limited by the present disclosure, and for example, in some implementations, as shown in Fig. 1, a slot feed pin 310 (i.e., a feed point of the slot antenna component) and a slot ground pin (i.e., a ground point of the slot antenna component) are arranged on the feed branch 300, and the slot feed pin 310 conducts the feed branch 300 with the conductive ground plate 100.

A structure of the circuit board is not limited by the present disclosure, and for example, the circuit board may be a printed circuit board (PCB). In some implementations, as shown in Fig. 2 to Fig. 4, the circuit board further includes an insulation dielectric layer 200, and the feed branch 300 is arranged at a side of the insulation dielectric layer 200 away from the conductive ground plate 100.

In some implementations, the insulation dielectric layer 200 is arranged between the feed branch 300 and the conductive ground plate 100, so as to effectively avoid a short circuit between the feed branch 300 and the loop antenna on the conductive ground plate 100, and improve stability of the antenna structure.

How to configure the slot feed pin 310 to conduct the feed branch 300 with the conductive ground plate 100 is not limited by the present disclosure, and for example, at least one pin through-hole is formed in the insulation dielectric layer 200, so that the slot feed pin 310 passes through the pin through-hole and conducts the feed branch 300 with the conductive ground plate 100.

A structure of the feed part 400 is not limited by the present disclosure, and for example, in some implementations, as shown in Fig. 1, the feed part 400 includes a loop feed pin 410 (i.e., a feed point of the loop antenna component) and a loop ground pin 420 (i.e., a ground point of the loop antenna component), the loop feed pin 410 and the loop ground pin 420 may be respectively regarded as a start point and an end point of a loop of metal at the periphery of the emission slit hole 110, the loop of metal, the loop feed pin 410 and the loop ground pin 420 together form the loop antenna component.

A relative position relationship between the feed branch 300 and the emission slit hole 110 is not limited by the present disclosure, and for example, in some implementations, as shown in Fig. 1 to Fig. 4, an extension direction in which the feed branch 300 extends intersects an extension direction in which the emission slit hole 110 extends.

In order to improve performance of the antenna, in some implementations, as shown in Fig. 1 to Fig. 4, the extension direction in which the feed branch 300 extends is perpendicular to the extension direction in which the emission slit hole 110 extends, and the extension direction in which the feed branch 300 extends is orthogonal to the extension direction in which the emission slit hole 110 extends, so that ground currents, excited by the loop antenna component and the slot antenna component, on the conductive ground plate 100 are orthogonal to each other, and thus the antenna structure is provided with good isolation, and the MIMO performance and the ECC performance of the antenna are improved.

In order to further improve the performance of the antenna, in some implementations, a relationship between a length of the feed branch 300 and a length of the emission slit hole 110 satisfies that: a resonant frequency of the slot antenna radiation is the same as a resonant frequency of the loop antenna radiation.

In the present disclosure, the resonant frequency of the slot antenna component may be adjusted by adjusting a position of the feed branch 300, and a length and a width of the emission slit hole 110; and the resonant frequency of the loop antenna component may be adjusted by adjusting the length of the emission slit hole 110. In a case where the resonant frequency of the slot antenna component and the resonant frequency of the loop antenna component are adjusted to the same with each other, such two antenna components compose a MIMO antenna group.

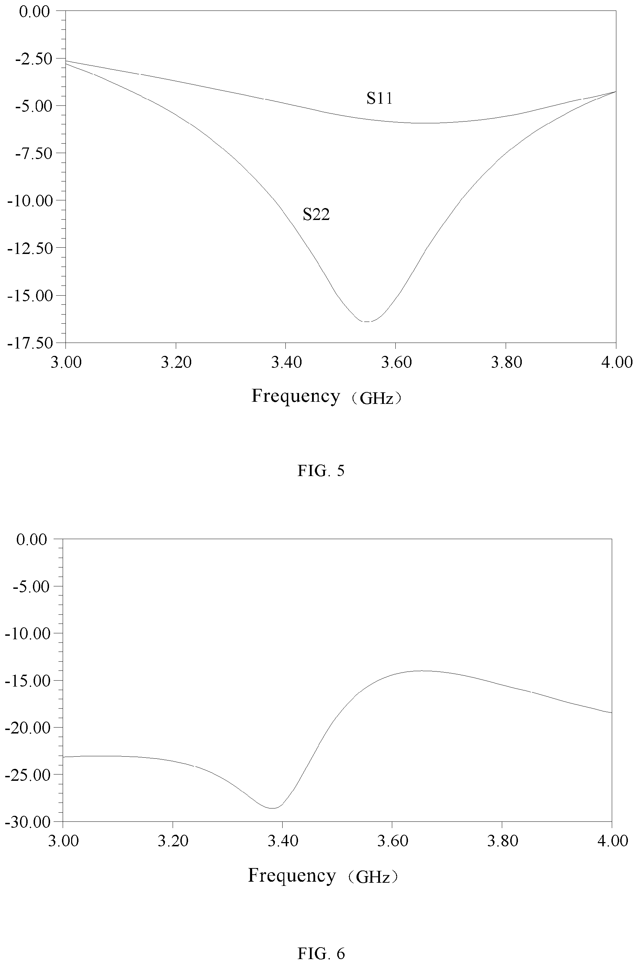

Fig. 5 is a schematic diagram of return loss curves (S curves) of a slot antenna component and a loop antenna component in an antenna assembly according to the present disclosure, S11 is the return loss curve of the loop antenna component, S22 is the return loss curve of the slot antenna component. According to Fig. 5, in a case where the resonant frequency of the slot antenna component and the resonant frequency of the loop antenna component are the same with each other, the two antenna components work in similar frequency bands, and compose an antenna group with good MIMO performance.

Fig. 6 is an isolation curve of a slot antenna component and a loop antenna component in an antenna assembly according to the present disclosure, and according to Fig. 6, in a case where the extension direction in which the feed branch 300 extends is orthogonal to the extension direction in which the emission slit hole 110 extends, an isolation between the two antennas is less than -15dB, which indicates that the two antennas are provided with good isolation, good MIMO performance and ECC performance.

A position of the emission slit hole 110 in the conductive ground plate 100 is not limited by the present disclosure, and for example, in some implementations, as shown in Fig. 1 to Fig. 4, the conductive ground plate 100 has a central region and an edge region located around the central region, the emission slit hole 110 is arranged in the edge region, the extension direction in which the emission slit hole 110 extends is the same as a direction in which an edge profile of the conductive ground plate 100 extends, and the feed part 400 is arranged between the emission slit hole 110 and an edge of the conductive ground plate 100.

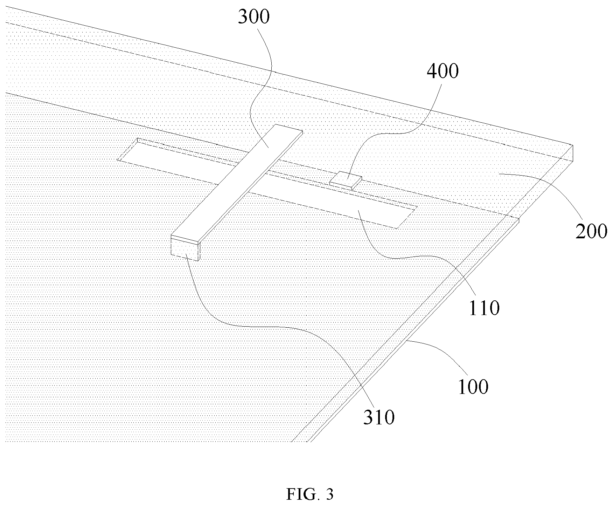

It should be noted that the insulation dielectric layer 200 extends beyond the edge of the conductive ground plate 100 to form a clearance region (as shown in Fig. 2 and Fig. 3), i.e., the clearance region is not provided with a material of the conductive ground plate 100, so as to ensure an effect of omnidirectional communication of the antenna.

The number of the emission slit hole 110 is not limited by the present disclosure, and for example, the antenna assembly may include a plurality of antenna structures, and a plurality of emission slit holes 110 are formed in the conductive ground plate 100, positions of the antenna structures and positions of the emission slit holes 110 are in correspondence one to one.

In the present disclosure, the circuit board is provided with the plurality of antenna structures, so that a capability of transceiving signals of the antenna assembly is greatly improved, usage expectations of 5G or even sub-6G technology are meet, and convenience for debugging the antenna assembly is improved.

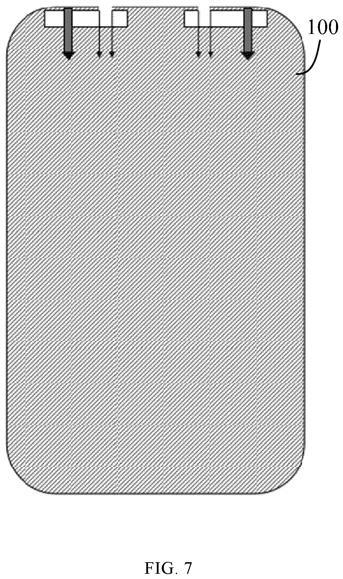

In some implementations, as shown in Fig. 7, the antenna assembly includes two antenna structures, two emission slit holes 110 are formed on a top of the conductive ground plate 100, the two antenna structures are matched and in correspondence with the two emission slit holes 110 one to one, and form the loop antenna component and the slot antenna component together with the corresponding emission slit holes 110.

Certainly, the present disclosure is not limited thereto, and for example, the antenna assembly may further include two antenna structures arranged at a bottom of the conductive ground plate 100, and two emission slit holes 110 are correspondingly arranged at the bottom of the conductive ground plate 100. Moreover, a plurality of emission slit holes 110 may be further formed on a side of the conductive ground plate 100, each emission slit hole 110 is also provided with the antenna structure corresponding thereto, a distance between any two antenna structures adj acent to each other is configured to ensure that an isolation between the antenna structures reaches a preset isolation. As another example, other antenna structures in the plurality of antenna structures may be arranged along a side of a terminal, and any two of the other antenna structures are arranged to be perpendicular to each other.

In addition, various modifications may be made to a structure scheme of the antenna assembly provided by the present disclosure, for example, the antenna structure may be a combination of a slot antenna component and a PIFA (Planar Inverted F-shaped Antenna) (or an IF A, Inverted F-shaped Antenna) antenna component, so that an antenna group with excellent MIMO performance is obtained by combining such two antenna components.

In an aspect of the present disclosure, a terminal device is provided. The terminal device includes a housing, and a mainboard and an antenna assembly arranged in the housing, the mainboard emits and receives signals through the antenna assembly, and the antenna assembly is the antenna assembly provided by the present disclosure.

According to the present disclosure, two antenna components are formed by using one emission slit hole 110 in the conductive ground plate 100 of the antenna assembly, so that the emission slit hole 110 serves as both a loop antenna of the loop antenna component and a slit part of the slot antenna component, and thus the two antenna components share one antenna region on the circuit board, an area occupied by the antenna structure on the circuit board and a volume occupied by the antenna structure in the terminal device are reduced, the MIMO performance of the antenna is maintained and an area of a clearance region of the antenna structure is reduced, thereby a compactness of a structure of the terminal device is improved.

Other structures in the terminal device are not limited by the present disclosure, for example, in some implementations, the terminal device may further includes a middle frame, a material of the middle frame may be a metal material, and the circuit board is fixedly arranged on the middle frame.

It should be understood that the above implementations are merely exemplary implementations adopted to illustrate a principle of the present disclosure, but the present disclosure is not limited thereto. For those skilled in the art, without departing from spirit and essence of the present disclosure, various modifications and improvements may be made, and these modifications and improvements are regarded as within the protection scope of the present disclosure.

## Claims

1. An antenna assembly, comprising:
a circuit board, and at least one antenna structure arranged on the circuit board; wherein,
the circuit board comprises a conductive ground plate, and at least one emission slit hole penetrating through the conductive ground plate along a direction in which a thickness of the conductive ground plate extends is formed in the conductive ground plate; and
any one of the at least one antenna structure comprises a feed branch and a feed part; wherein, a position of the feed branch is matched with one of the at least one emission slit hole, and the feed branch is configured to excite the emission slit hole to generate slot antenna radiation; and the feed part is arranged at an edge of the emission slit hole, and is configured to drive the emission slit hole to generate loop antenna radiation.

2. The antenna assembly of claim 1, wherein, a slot feed pin and a slot ground pin are arranged on the feed branch, and the slot feed pin conducts the feed branch with the conductive ground plate.

3. The antenna assembly of claim 2, wherein, the circuit board further comprises an insulation dielectric layer, and the feed branch is arranged at a side of the insulation dielectric layer away from the conductive ground plate.

4. The antenna assembly of claim 3, wherein, at least one pin through-hole is formed in the insulation dielectric layer, and the slot feed pin passes through one of the at least one pin through-hole, and conducts the feed branch with the conductive ground plate.

5. The antenna assembly of claim 1, wherein, the feed part comprises a loop feed pin and a loop ground pin.

6. The antenna assembly of any one of claims 1 to 5, wherein, an extension direction in which the feed branch extends intersects an extension direction in which the emission slit hole extends.

7. The antenna assembly of claim 6, wherein, a length of the feed branch and a length of the emission slit hole make a resonant frequency of the slot antenna radiation the same as a resonant frequency of the loop antenna radiation.

8. The antenna assembly of any one of claims 1 to 5, wherein, the conductive ground plate has a central region and an edge region located around the central region, the emission slit hole is arranged in the edge region, an extension direction in which the emission slit hole extends is the same as a direction in which an edge profile of the conductive ground plate extends, and the feed part is arranged between the emission slit hole and an edge of the conductive ground plate.

9. The antenna assembly of any one of claims 1 to 5, wherein, the at least one antenna structure comprises a plurality of antenna structures, the at least one emission slit hole comprises a plurality of emission slit holes, and positions of the antenna structures are in correspondence with positions of the emission slit holes one to one.

10. A terminal device, comprising:
a housing, and a mainboard and an antenna assembly are arranged in the housing; wherein, the mainboard emits and receives wireless signals through the antenna assembly, and the antenna assembly is the antenna assembly according to any one of claims 1 to 9.
